(19) Europäisches Patentamt
European Patent Office
Office européen des brevets

(11) Publication number: **0 346 467 A1**

(12) # EUROPEAN PATENT APPLICATION

published in accordance with Art. 158(3) EPC

(21) Application number: 88900592.2

(22) Date of filing: 26.12.87

Data of the international application taken as a basis:

(86) International application number: PCT/JP87/01044

(87) International publication number: WO89/06243 (13.07.89 89/15)

(51) Int.Cl.³: C 08 B 37/08

(43) Date of publication of application: 20.12.89 Bulletin 89/51

(84) Designated Contracting States: DE FR GB IT

(71) Applicant: KYOWA HAKKO KOGYO CO., LTD.
Ohtemachi Bldg., 6-1 Ohtemachi I-chome
Chiyoda-ku Tokyo 100(JP)

(72) Inventor: MURATA, Hideki
1-18, Jiriki-cho
Hofu-shi Yamaguchi 747(JP)

(72) Inventor: SHIOMI, Michio
2-1-11, Kyowa-cho
Hofu-shi Yamaguchi 747(JP)

(72) Inventor: ISHII, Shinzo
2-2-403, Kyowa-cho
Hofu-shi Yamaguchi 747(JP)

(74) Representative: Vossius & Partner
Siebertstrasse 4 P.O. Box 86 07 67
D-8000 München 86(DE)

(54) **PROCESS FOR PURIFYING HYALURONIC ACID.**

(57) A process for purifying hyaluronic acid, which comprises using a macroreticular anion-exchange resin in the separation and purification of hyaluronic acid from a solution containing it.

EP 0 346 467 A1

Croydon Printing Company Ltd.

SPECIFICATION

# PROCESS FOR PURIFYING HYALURONIC ACID

## Technical Field

The present invention relates to a process for purifying hyaluronic acid.

Hyaluronic acid is a polysaccharide represented by the following structural formula:

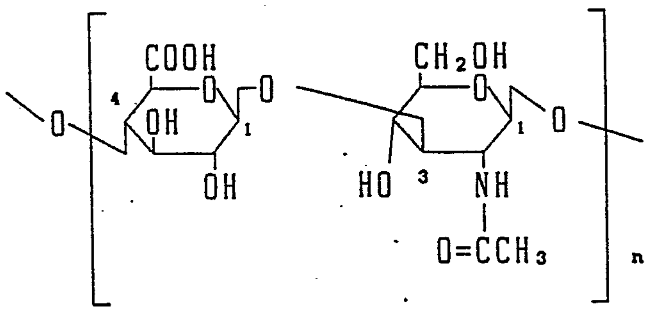

It is contained in the vitreous body, umbilical cord, articular fluid, skin, aortic intima and adventitia, etc. of animals; and it serves as a humectant and for retention of water and prevention of the invasion of bacteria. In recent years, this substance has been developed as an ingredient of cosmetics, as a drug for the treatment of cutaneous and articular diseases, and as an auxiliary drug in ophthalmic operations.

## Background Art

It has been long known that hyaluronic acid is a constituent of the capsule of certain microorganisms belonging to the genus *Streptococcus* [A. P. Maclennan: J. Gen. Microbiol., 15, 485-491 (1956)]. Also is known a fermentation process for producing hyaluronic acid which comprises culturing a strain in a nutrient medium containing at least 3% saccharide with aeration and agitation (Japanese Published

Unexamined Patent Application No. 56692/1983).

Heretofore, some techniques have been used to remove compounds of high molecular weight which are contained as impurities in the fermentation liquor. Such techniques include treatment with trichloroacetic acid or a mixture of chloroform and isoamyl alcohol; use of a proteolytic enzyme; and selective precipitation of hyaluronic acid with cetyl pyridinium chloride.

The use of hyaluronic acid as an ingredient of cosmetics is increasing, and its use as a drug is expected. When hyaluronic acid is used as a drug, it must be a highly purified product free of proteins, nucleic acids, pyrogens and other impurities. It is also said that, for some types of uses, the effectiveness of hyaluronic acid increases as its molecular weight is higher and its viscosity is higher.

The conventional methods for isolating and purifying hyaluronic acid are not advantageous for industrial application because of complicated steps involved, and high cost and toxicity of the chemicals used. Under the circumstances, there has been a demand for the development of an industrially advantageous method of purifying hyaluronic acid.

## Disclosure of the Invention

The present inventors have noted the fact that hyaluronic acid and compounds of high molecular weight existing as impurities are negatively charged substances, and have studied the use of ion exchange resins for the purification of hyaluronic acid. As a result, it has been found that anion exchange resins generally adsorb proteins, nucleic acids, pyrogens and hyaluronic acid but macroreticular anion exchange resins with a high divinylbenzene content do not adsorb hyaluronic acid of high molecular weight, and a process for highly purifying hyaluronic acid has been established based on these findings.

The present invention is described below in detail.

The present invention provides a process for purifying hyaluronic acid characterized in that a macroreticular anion exchange resin is used for isolating and purifying hyaluronic acid from a solution containing the same.

The macroreticular anion exchange resins used in the present invention are styrene anion exchange resins with a high divinylbenzene content of macro-porous or high-porous type, such as Diaion HPA-25 and HPA-75 (Mitsubishi Chemical Industries, Ltd.) and IRA-900 and IRA-904 (Amberlite). The amount of the anion exchange resin to be used is preferably 70 to 100% based on the volume of a solution containing 2 to 10 g/l hyaluronic acid.

The present invention is preferably applied to hyaluronic acid-containing culture obtained by fermentation, but is also applicable to preparations obtained by extraction from animal tissues.

The hyaluronic acid culture obtained by fermentation is obtained by culturing a microorganism capable of producing hyaluronic acid (e.g., Streptococcus zooepidemicus NCTC7023) in the following manner.

As the medium, either a synthetic medium or a natural medium may be used so long as it contains carbon sources, nitrogen sources, inorganic compounds and other nutrients in proper amounts. As the carbon source, glucose, sucrose, blackstrap molasses, starch hydrolyzate, etc. may be used. Preferable nitrogen sources include organic nutrients such as peptone, polypeptone, yeast extract, corn steep liquor, casein hydrolyzate, brain heart infusion and equine serum, which may be used in combination with ammonium sulfate, ammonium nitrate, ammonium chloride or ammonia. As the inorganic salt, sodium chloride, sodium phosphate, potassium phosphate, magnesium sulfate, sodium thiosulfate, ferrous sulfate, manganese sulfate, calcium chloride, calcium carbonate, etc. may be used. When natural nutrients are used,

inorganic salts contained therein are sufficient for culturing in some cases. In addition, vitamins such as thiamine, nicotinic acid, biotin and pantothenic acid may also be used as requried.

Culturing is carried out under aerobic conditions, for example, with shaking and with aeration. The culturing temperature is 25 to 42°C, preferably 30 to 38°C. The suitable pH range is 5 to 9, and pH control is effected by the addition of aqueous solution of ammonia, sodium hydroxide, potassium hydroxide or calcium carbonate.

Culturing is usually continued for two to four days, whereby hyaluronic acid is accumulated mainly in the culture medium.

Purification of hyaluronic acid in the thus obtained culture is carried out in the following manner.

The culture is diluted with water to make a hyaluronic acid concentration of 0.5 to 2 g/l, preferably about 1 g/l. About 1 to 10% (v/v) of carbon is added, followed by stirring at 15 to 30°C for about one hour to mix the culture and water. The resulting mixture is filtered by using a Nutsche funnel. The carbon-treated solution thus obtained is then passed through a column packed with a macroreticular anion exchange resin at a space velocity (S.V.) of 1 to 2 /h, and the pH of the treated solution thus obtained is adjusted to around neutrality by the addition of hydrochloric acid or the like. After sodium chloride is added to a concentration of about 1 mol/l, a water-soluble organic solvent such as acetone, methanol, ethanol, n-propanol or isopropanol is added in an amount of 1 to 4 times that of the treated solution to precipitate sodium hyaluronate. The precipitate is collected, washed with 50 to 100% ethanol and dried *in vacuo*, to obtain purified hyaluronic acid.

The hyaluronic acid purified by the method of the present invention invariably has a viscosity of not lower than 100 cp and has a molecular weight of 2,000,000 or higher as

measured by the limiting viscosity method described in Biochim. Biophys. Acta, 42, 476 (1960).

Hyaluronic acid accumulated in the culture has a wide range of molecular weight, for example, for about 10,000 to 3,000,000 and its molecular weight distribution usually varies from batch to batch. Hence purification of the whole hyaluronic acid in the culture regardless of molecular weight will give purified products of different viscosities ranging from 60 cp to 100 cp. In contrast, the method of the present invention gives hyaluronic acid with a molecular weight of about 2,000,000 or higher because hyaluronic acid with a lower molecular weight, as well as proteins, nucleic acids and pyrogens contained, is adsorbed on the macroreticular anion exchange resin used.

The method of the present invention may also be used for further purifying commercially available hyaluronic acid. Hyaluronic acid now commercially available are mainly extracts from cockscomb and the like, which can be freed from low-molecular components by the method of the present invention to give purified hyaluronic acid with a molecular weight of not lower than 1,500,000.

Repurification of commercial products can be carried out by dissolving sodium hyaluronate in water at a concentration of 0.5 to 2 g/l, and passing the solution through a column packed with a macroreticular anion exchange resin at a space velocity (S.V.) of 1 to 2 /h, followed by the same treatments as in the purification of hyaluronic acid-containing culture.

Examples of the present invention are shown below.

Example 1

*Streptococcus zooepidemicus* NCTC7023 [J. Gen. Microbiol., 15, 485-491 (1956)] was cultured on brain heart infusion/agar medium (Nissui Seiyaku) at 37°C for 16 hours. The grown cells were inoculated into 300 ml of a seed medium

(pH 7.0) comprising 1% glucose, 1.5% peptone, 0.5% yeast extract, 1% corn steep liquor, 0.3% sodium glutamate, 0.2% dipotassium phosphate, 0.05% magnesium sulfate, 0.1% sodium thiosulfate and 2% calcium carbonate, and subjected to shaking culture at 37°C for 16 hours. The seed culture thus obtained (150 ml) was inoculated into 3 ℓ of a fermentation medium (pH 7.2) comprising 2.5% glucose, 1.5% peptone, 0.5% yeast extract, 0.5% corn steep liquor, 0.2% dipotassium phosphate, 0.005% magnesium sulfate and 0.1% sodium thiosulfate in a 5-ℓ jar fermenter, and cultured at 37°C at pH 7.0 for 26 hours with aeration of 0.3 vvm. The obtained hyaluronic acid culture (3 ℓ) was diluted to 20 ℓ with deionized water, and 200 g of carbon was added. The resulting mixture was stirred at room temperature for one hour and then filtered by using a Nutsche funnel to give 20 ℓ of a carbon-treated solution. From this solution were prepared samples of purified hyaluronic acid according to the following three procedures.

(1) Control A

To 20 ℓ of the carbon-treated solution was added 1.2 kg of NaCl. Then, 16 ℓ of acetone was added to the resulting solution to give a precipitate of sodium hyaluronate. The precipitate was separated, washed with ethanol and dried _in vacuo_ to obtain 12.8 g of purified hyaluroic acid.

(2) Control B

To 20 ℓ of the carbon-treated solution was added 5 ℓ of 10% aqueous solution of cetyl pyridinium chloride (CPC). The deposited precipitate was separated, washed with water and dissolved in 20 ℓ of 0.3 M aqueous solution of NaCl. To the resulting solution was added 30 ℓ of acetone to give a precipitate of sodium hyaluronate. The precipitate was separated, washed with ethanol and dried _in vacuo_ to obtain 12.5 g of purified hyaluronic acid.

(3) Test

The carbon-treated solution (20 ℓ) was passed

through a colum packed with 2.5 ℓ of macroreticular anion exchange resin Diaion HPA-75 (Mitsubishi Chemical Industries, Ltd.) at a rate of 5 ℓ/h. The treated solution thus obtained (20 ℓ) was adjusted to pH 7.0 by the addition of HCl, and 1.2 kg of NaCl was added to the solution. Then, 16 ℓ of acetone was added, and the deposited precipitate of sodium hyaluronate was separated, washed with ethanol and dried *in vacuo* to obtain 11.5 g of purified hyaluronic acid.

The purified products obtained in (1) - (3) above were examined for the protein content, nucleic acid (absorbance at 260 nm), viscosity, limiting viscosity and pyrogenicity.

The result obtained is summarized in Table 1.

Table 1

| | Protein content (%) | Nucleic acid $OD_{260nm}$ (0.1% soln.) | Pyro-genicity test | Vis-cosity (cp) | Limit-ing vis-cosity (dl/g) | Molecular weight |
|---|---|---|---|---|---|---|
| Control A | 0.41 | 0.036 | + | 62 | 20.6 | $1.26 \times 10^6$ |
| Control B | 0.10 | 0.010 | + | 76 | 20.6 | $1.26 \times 10^6$ |
| Test | 0.01 | 0.001 | - | 150 | 33.0 | $2.30 \times 10^6$ |

Note) The measurements were made according to the following methods:

Protein content: Measured by the Folin's method.

Nucleic acid: Absorbance of 0.1% sodium hyaluronate solution at 260 nm was measured.

Pyrogenicity test: 0.1% solution of sodium hyaluronate in physiological saline was intravenously injected to a rabbit in an amount of 10 ml/kg.

Viscosity: Viscosity of 0.1% aqueous solution of sodium

hyaluronate was measured with a BL rotational viscometer (60 rpm, No. 2 rotor, 30°C).

Limiting viscosity: Measured by the method described in Biochim, Biophys, Acta, 42, 476 (1960) using an Ubbelohde's viscometer (0.2 M NaCl solution, 25°C).

Molecular weight: Calculated by the following equation:

$$\text{Limiting viscosity} = 36 \times (\text{molecular weight})^{0.78} \times 10^{-5}$$

Example 2

A solution of 1 g of sodium hyaluronate (Q. P. Corporation) in 1 ℓ of water was passed through a column packed with 200 ml of Diaion HPA-75 (OH) (Mitsubishi Chemical Industries, Ltd.) at a rate of 400 ml/h. The treated solution thus obtained (1.2 ℓ) was found to contain 312 mg of sodium hyaluronate, showing that about 70% of the sodium hyaluronate charged was adsorbed on the resin. The treated solution was adjusted to pH 7.0 by the addition of hydrochloric acid, and 70 g of NaCl was added to the solution. Then, 1 ℓ of acetone was added, and the deposited precipitate of sodium hyaluronate was separated and dried in vacuo to obtain 305 mg of purified sodium hyaluronate. Table 2 shows the viscosity, limiting viscosity and molecular weight of the samples before and after purification measured in the same manner as in Example 1. The result indicates that the method of the present invention can be effectively applied also to hyaluronic acid derived from natural substances.

Table 2

| | Viscosity (cp) | Limiting viscosity (dl/g) | Molecular weight |
|---|---|---|---|
| Before purification | 9.2 | 16.7 | $0.96 \times 10^6$ |
| After purification | 102 | 23.6 | $1.50 \times 10^6$ |

CLAIM

A process for purifying hyaluronic acid characterized in that a macroreticular anion exchange resin is used for isolating and purifying hyaluronic acid from a solution containing the same.

# INTERNATIONAL SEARCH REPORT

International Application No PCT/JP87/01044

**I. CLASSIFICATION OF SUBJECT MATTER** (if several classification symbols apply, indicate all) [3]

According to International Patent Classification (IPC) or to both National Classification and IPC

Int.Cl$^4$ C08B37/08

**II. FIELDS SEARCHED**

Minimum Documentation Searched [4]

| Classification System | Classification Symbols |
|---|---|
| IPC | C08B37/08 |

Documentation Searched other than Minimum Documentation to the Extent that such Documents are Included in the Fields Searched [5]

**III. DOCUMENTS CONSIDERED TO BE RELEVANT** [14]

| Category * | Citation of Document, [16] with indication, where appropriate, of the relevant passages [17] | Relevant to Claim No. [18] |
|---|---|---|
| A | JP, A, 59-166504 (Ichimaru Falcos Kabushiki Kaisha) 19 September 1984 (19. 09. 84) Column 1, line 5 to column 2, line 16 (Family: none) | 1 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search [2] | Date of Mailing of this International Search Report [2] |
|---|---|
| February 29, 1988 (29.02.88) | March 14, 1988 (14.03.88) |
| **International Searching Authority [1]** | **Signature of Authorized Officer [20]** |
| Japanese Patent Office | |